# EUROPÄISCHE PATENTSCHRIFT

(11) **EP 1 485 862 B1**
(45) Veröffentlichungstag und Bekanntmachung des Hinweises auf die Patenterteilung: **27.06.2007**
(21) Anmeldenummer: 03744807.3
(22) Anmeldetag: 18.03.2003
(51) Int. Cl.: G06K 7/12, G06K 19/06

(54) **VERFAHREN ZUR IDENTIFIKATION UND AUTHENTIFIKATION EINES GEGENSTANDES**
METHOD FOR IDENTIFICATION AND AUTHENTICATION OF AN OBJECT
PROCEDE D'IDENTIFICATION ET D'AUTHENTIFICATION D'UN OBJET

(30) Priorität: 21.03.2002 DE 10212734
(43) Veröffentlichungstag der Anmeldung: 15.12.2004
(73) Patentinhaber: Bundesdruckerei GmbH, 10958 Berlin (DE); Accu-Sort System, Inc., Telford PA 18969-1196 (US)
(72) Erfinder: NIGGEMANN, Matthias, 10967 Berlin (DE); PAESCHKE, Manfred, 16352 Basdorf (DE); FRANZ-BURGHOLZ, Arnim, 14612 Falkensee (DE); ZERBEL, Hans, 13437 Berlin (DE)
(74) Vertreter: Riebling, Peter
(86) Internationale Anmeldenummer: PCT/EP2003/002780
(87) Internationale Veröffentlichungsnummer: WO 2003/081522

(56) Entgegenhaltungen:
- EP-A- 0 628 927
- WO-A-01/06453
- WO-A-98/50882
- DE-A- 2 000 816
- US-A- 3 942 154

## Beschreibung

Die Erfindung betrifft ein Verfahren zur Identifikation und Authentifikation eines Gegenstandes, insbesondere Dokumente, Wert- und Sicherheitserzeugnisse oder Konsumgüter.

Es sind Verfahren und Vorrichtungen bekannt, um Gegenstände anhand von auf deren Oberfläche aufgebrachten Barcodes zu identifizieren. In Form von Barcodes lassen sich verschiedenste Informationen auf Konsumgütern, Dokumenten, Wert- und Sicherheitserzeugnissen und anderen Gegenständen aufbringen, die dann mittels eines Barcodescanners maschinell ausgelesen werden können. Optische Scanner, insbesondere sogenannte Barcodescanner, sind Stand der Technik. Bei derartigen Barcodescannern wird das von einer Lichtquelle, zum Beispiel einer Laserdiode, emittierte Licht auf eine Drehspiegeleinheit geleitet und erzeugt einen Scanstrahl, der den auf einem Gegenstand aufgebrachten Barcode überstreicht. Das von den hellen bzw. dunklen Stellen des Barcodes mehr oder weniger reflektierte Licht gelangt zurück auf die Drehspiegeleinheit und wird einem photoelektrischen Detektor zugeführt. In Detektor oder einer nachgeschalteten Einheit wird die Barcodeinformation decodiert und steht für die weitere Verarbeitung zur Verfügung.

Die WO 01/06453 A1 offenbart bereits alle Merkmale des Oberbegriffs das Patentanspruchs 1, wobei ein erster sichtbarer Barcode mit lichtsensitiven Partikeln verwendet wird, und im Abstand dazu ein zweiter unsichtbarer Barcode mit lichtsensitiven Partikeln.

Aufgabe der Erfindung ist es, ein Verfahren anzugeben, das es basierend auf einem üblichen Barcode-Scanvorgang erlaubt, einen Gegenstand sicherer zu Identifizieren und gleichzeitig zu Authentifizieren.

Die Lösung dieser Aufgabe erfolgt durch die Merkmale der unabhängigen Patentansprüche 1 und 9.

Mit Hilfe des erfindungsgemäßen Verfahrens können simultan einerseits offen codierte Informationen, z.B. in Form eines Barcodes, auf einem Gegenstand erfasst werden und andererseits kann die Echtheit (Authentizität) des Gegenstandes, Wertdokumentes etc. anhand der zusätzlich aufgebrachten, codierten Sicherheitsinformation nachgewiesen werden.

Im Unterschied zur WO 01/06453 A1 sieht die vorliegende Erfindung vor, dass eine eindeutige räumliche Trennung zwischen den Linien des sichtbaren Barcodes und den unsichtbaren lichtsensitiven Partikeln erfolgt und die unsichtbaren lichtsensitiven Partikel als negativer, komplementärer, ergänzender Barcode innerhalb des ersten sichtbaren Barcodes vorliegen, zwischen den Barcodelinien des ersten sichtbaren Barcodes. Dies dient der Erhöhung der Sicherheit der Identifizierung/Authentisierung, da es keine Interferenzen zwischen den sichtbaren Barcodelinien und den unsichtbaren lichtsensitiven Partikeln gibt. Zudem wird dadurch eine sehr einfache, sichere und kostengünstige Codierung erzielt, die zuverlässig mit herkömmlichen Scannern ohne zusätzlichen Hard- oder Softwareaufwand gelesen werden kann.

Eine nach dem Verfahren arbeitende Vorrichtung basiert auf dem Prinzip eines aus dem Stand der Technik bekannten Laserscanners, der jedoch anstelle nur eines photoelektrischen Bauelements über mindestens zwei photoelektrische Bauelemente mit anschließenden Decodiereinrichtungen verfügt. In einem ersten Messkanal wird auf klassische Art und Weise eine auf einem Gegenstand aufgebrachte offene Codierung in Form eines Barcodes, basierend auf der unterschiedlichen Reflexion / Absorption von Licht an dunklen und hellen (im Idealfall schwarz / weiß) Stellen, erfasst. In dem zweiten Messkanal erfolgt die Detektion einer auf dem selben Gegenstand aufgebrachten codierten Sicherheitsinformation. Letztere ist vorzugsweise in Form von lumineszierenden Sicherheitspigmenten / Farbstoffen aufgebracht. Derartige lumineszierenden Substanzen sind bekannt, jedoch nur sehr bedingt auf dem freien Markt erhältlich und in der Regel Unternehmen/Organisationen aus der Sicherheitsbranche vorbehalten. Darüber hinaus können nicht am Markt erhältliche Spezialsubstanzen eingesetzt werden, die über spezifische Lumineszenzeigenschaften verfügen.

Werden solche Substanzen mit Hilfe der Lichtquelle des Barcodescanners, in der Regel einer Festkörperlaserdiode, bei einer bestimmten optischen Wellenlänge angeregt, so zeigen sie in einem anderen Wellenlängenbereich eine spezifische Lumineszenz die von einem Detektor erfasst werden kann. Die Detektoreinrichtung des zweiten Messkanals wird vorzugsweise mit einem wellenlängenselektierenden Element, wie z.B. einem Interferenzfilter, ausgestattet.

Die Erfindung ermöglicht eine schnelle und einfache maschinelle Identifizierung / Authentifizierung von Dokumenten oder Wert- und Sicherheiterzeugnissen, wie zum Beispiel Banknoten, Ausweiskarten, Gutscheine, Briefmarken, Schecks, Etiketten, Bücher, Pfandlabels und dergleichen, oder von Luxusartikeln und Konsumgütern, wie zum Beispiel Uhren, Schmuck, Tonträger, Kleidung, Möbel, Kfz-Ersatzteile, Pfandgebinde, Medikamente, Lebensmittel und dergleichen.

Die Erfindung lässt sich anwenden auf alle bekannten Ausführungsformen von Laser-Barcodescannern, wie zum Beispiel Schlitzleser, Linien-, Raster-, Bidirektional- bis hin zu Omnidirektionalscannern, die auf Basis von rotierenden und vibrierenden Spiegeln sowie Spiegelsystemen arbeiten.

Als Lichtquellen kommen alle dem Stand der Technik nach bekannten Lichtquellen in Frage, die in Barcodescannern eingesetzt werden, insbesondere Laserdioden. Diese Laserdioden emittieren Licht typischerweise im sichtbaren roten Wellenlängenbereich, zum Beispiel bei 635, 650, 660, 670, 685 nm. Darüber hinaus, können auch im nicht-sichtbaren Wellenlängenbereich emittierende Laserdioden, zum Beispiel bei 780, 808, 850, 950, 980, 1300, 1550 nm, verwendet werden. Die verwendete Laserdiode muss selbstverständlich auf die Anregungsbande des zu detektierenden Sicherheitspigments / -farbstoffes abgestimmt sein

Vorzugsweise verfügt der Scanner nur über eine Laserdiode. Es ist jedoch auch eine Ausführungsform mit zwei Laserdioden denkbar, die bei unterschiedlichen Wellenlängen emittieren. Diese Ausführungsform ist sinnvoll, wenn eine sichere Lesung der offen kodierten Information, in der Regel eines Barcodes, mit der für die Erfassung der Sicherheitsinformation notwendigen Laserdiode nicht gewährleistet ist. Ein solcher Fall kann unter Umständen bei der Verwendung von im Infraroten emittierenden Laserdioden eintreten, da sich die Absorptions-/Reflektionseigenschaften von Druckfarben im sichtbaren und infraroten Bereich unter Umständen signifikant voneinander unterscheiden. Das heißt konkret, ein bei einer Wellenlänge im Bereich von 630 - 670 nm lesbarer Barcode ist in Abhängigkeit von der verwendeten Druckfarbe nicht zwingend im Infrarotbereich sicher detektierbar.

Ein derart konzipierter Scanner besteht demnach aus zwei Lichtquellen, mindestens zwei Detektoren, jedoch nur aus einer Drehspiegeleinheit und einem Gehäuse.

Die Materialien der in den Detektionseinrichtungen eingesetzten photoelektrischen Bauelemente, zum Beispiel auf Si- oder GalnAs-Basis, etc., sowie die wellenlängenselektierende Elemente in Form von zum Beispiel Kantenfiltern oder Interferenzfiltern, etc. müssen jeweils auf die zu messenden Wellenlängen abgestimmt werden.

Als weitere wellenlängenselektierende Elemente können auch klassische optische Elemente, wie Prismen und Gitter zum Einsatz kommen. Auf diese Weise ist gegebenenfalls eine spektrale Auflösung des lumineszierenden Sicherheitsmerkmals erzielbar und damit eine weitere Erschwerung der Nachstellbarkeit eines Sicherheitsmerkmals. Als Detektor kann in diesem Fall auch eine schnell arbeitende CCD-Zeilenkamera eingesetzt werden.

Die offen codierte Information kann aus allen Arten der nach dem Stand der Technik bekannten optischen Codierungen bestehen, die mittels eines laserbasierten Barcodescanners gelesen werden können. Hierzu zählen insbesondere alle eindimensionale Barcodes, wie z.B. Code 2/5 Industrial, Code 2/5 Interleaved, EAN 8, EAN 13, Code 39, Code 39 extended, Code 93, Code 128, UPC Version A, UPC Version E, Codebar, als auch zweidimensionale Codes, wie z.B. PDF 417, Codablock, Code 49 oder Code 16 K. Die Aufbringung der codierten Informationen erfolgt mittels Standarddruckverfahren, wie z.B. Hochdruck, Tiefdruck, Offsetdruck, Siebdruck, Flexodruck, Nadel-Matrix-Druck, Tintenstrahl-Druck, Thermodruck oder Laserdruck. Die generellen Anforderungen an den Barcode und das zu bedruckende Substrat wie Ausrichtung, Größe, Modulbreite, Farbe, Hintergrundfarbe usw. entsprechen ebenfalls denen aus dem Stand der Technik bekannten.

Die codierte Sicherheitsinformation enthalten eine lumineszierende Substanz in Form eines Pigments oder Farbstoffes. Die hierzu eingesetzten Materialien besitzen die Eigenschaft bei optischer Anregung mit einer bestimmten Wellenlänge bei einer oder mehreren anderen Wellenlängen spezifische Emissionen zu zeigen. Im Prinzip können sowohl "down-converting" als auch "up-converting" Effekte ausgenutzt werden, d.h. Emissionen bei niedrigeren oder höheren Wellenlängen in Bezug auf die Anregungswellenlänge.

Vorzugsweise können Materialien eingesetzt werden, die mit einer in Barcodescannern standardmäßig verwendeten Laserdiode angeregt werden können. Ebenfalls können im nicht-sichtbaren Wellenlängenbereich emittierende Laserdioden verwendet werden.

### Beispiele:

Anregung bei 650 nm, max. Emission bei 800 nm
Anregung bei 980 nm, max. Emission bei 550 nm
Anregung bei 980 nm, max. Emission bei 1400 nm

Es können auch Materialien verwendet werden, die mehr als eine Emissionsbande zeigen. Durch Wahl entsprechender, insbesondere schmalbandiger Filter kann dann eine Emissionsbande zur Detektion selektiert werden. Aus messtechnischen Gründen ist es vorteilhaft, wenn der Stokes- bzw. Anti-Stokes-Shift möglichst groß ist.

Die Aufbringung der Sicherheitspigmente / -farbstoffe erfolgt entweder mittels Standarddruckverfahren, wie z.B. Hochdruck, Tiefdruck, Offsetdruck, Siebdruck, Flexodruck, Tintenstrahl-Druck oder auch mittels Standard-Lackierverfahren, wie z.B. Sprühen, Tauchen, Rollen. Dabei kann die Aufbringung sowohl auf ein Wert- oder Sicherheitserzeugnis als auch direkt auf ein Produkt erfolgen. Das Merkmal kann in Körperfarbe oder transparent aufgebracht werden.

Die Ausgestaltung des Sicherheitsmerkmals kann auf unterschiedliche Art erfolgen, nämlich als:

Flächiger Unterdruck des Barcodes mit dem Sicherheitsmerkmal, Personalisierung durch nachträglich aufgedruckten Barcode (Barcode in schwarzer Farbe, Fluoreszenz wird hier selektiv geschluckt), es entsteht quasi ein fluoreszierender "Negativ-Barcode".

Direktdruck einer zusätzlichen Codierung in Form eines Barcodes mit der fluoreszierenden Farbe.

Ein Ausführungsbeispiel der Erfindung wird nachfolgend anhand der Zeichnungsfiguren näher beschrieben.

Dabei zeigen:
- Figur 1:: eine schematische Darstellung eines erfindungsgemäß modifizierten Barcodescanners;
- Figur 2:: Ausgestaltung der offen codierten Informationen und der codierten Sicherheitsinformationen;
- Figur 3:: Positionsbezogene Aufbringung der offen codierten Informationen und der codierten Sicherheitsinformationen;
- Figur 4:: eine Detektion mehrerer vom Sicherheitsmerkmal emittierter Wellenlängen;
- Figur 5:: beispielhaft ein mit der Anordnung nach Fig. 4 erfasstes Emissionsspektrum;
- Figur 6:: ein Beispiel für eine Anregung ein einem Wellenlängenbereich und eine Lumineszenzemission in dem selben und einem zusätzlichen Wellenlängenbereich; und
- Figur 7:: ein Beispiel für eine Anordnung zum Abtasten eines rotierenden, mit Sicherheitsmerkmalen versehenen Gegenstands.

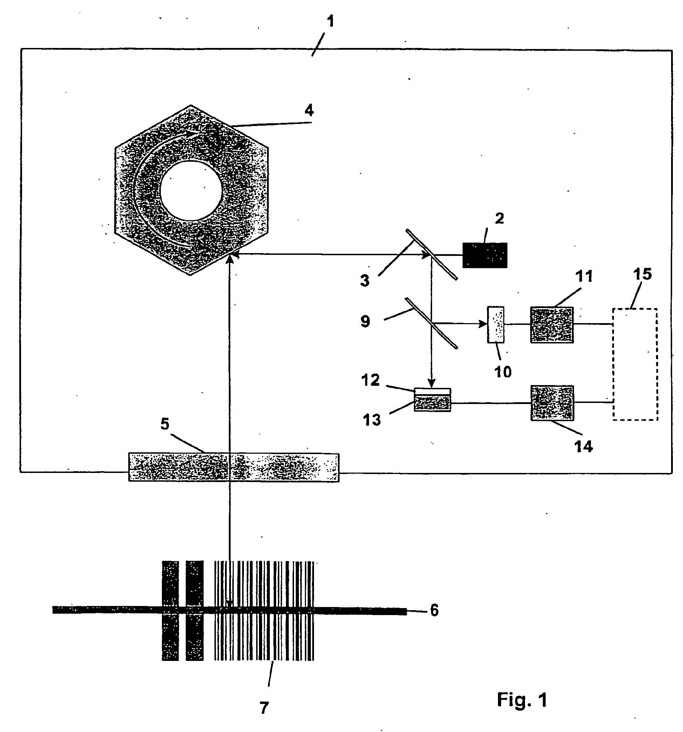

Die in Figur 1 dargestellte, auf einem Barcodescanner basierende, kombinierte Identifizierung- und Authentifizierungseinheit ist vorzugsweise in einem feststehenden oder beweglichen Gehäuse 1 angeordnet. Das von einer Laserdiode 2 emittierte Licht mit der Wellenlänge λ₁ passiert einen halbdurchlässigen oder dichroitischen Spiegel 3 und fällt auf eine Drehspiegeleinheit 4. Die Drehspiegeleinheit 4 erzeugt einen oszillierenden Scanstrahl 6, der durch ein Fenster 5 des Gehäuses 1 auf einen Barcode 7 und ein codiertes Sicherheitsmerkmal 8 eines Gegenstandes fällt und diese überstreicht. Das Sicherheitsmerkmal 8 wird durch das auftreffende Licht der Wellenlänge λ₁ zum Leuchten angeregt und emittiert Lumineszenzlicht der Wellenlänge λ₂. Das von den hellen bzw. dunklen Stellen des Barcodes 7 mehr oder weniger reflektierte Licht der Wellenlänge λ₁ und das von dem Sicherheitsmerkmal emittierte Lumineszenzlicht der Wellenlänge λ₂ wird über die Drehspiegeleinheit 4 und ein über ein Spiegelsystem bestehend aus dem ersten halbdurchlässigen oder dichroitischen Spiegel 3 und einem zweiten halbdurchlässigen oder dichroitischen Spiegel 9, einer Detektoreinrichtung zugeführt. In einem ersten Detektor 10 erfolgt die Erfassung des von dem Barcode reflektierten Lichtes mit der Wellenlänge λ₁ und eine anschließende Decodierung der Barcodeinformation in einem Decoder 11.

Im Strahlengang eines zweiten Detektors 13 ist ein wellenlängenselektierendes Element 12, wie beispielsweise ein Interferenzfilter angeordnet, das nur Licht der Wellenlänge λ₂ passieren lässt.

Der zweite Detektor 13 erfasst auf diese Weise selektiv das vom Sicherheitsmerkmal emittierte Lumineszenzlicht mit der Wellenlänge λ₂. Die codierte Sicherheitsinformation mit anschließend mit Hilfe eines zweiten Decoders 14 entschlüsselt.

Mit Hilfe einer Auswerteeinrichtung kann der Gegenstand anhand der decodierten offenen Informationen 7 und der decodierten Sicherheitsinformationen 8 identifiziert und authentifiziert werden. Die Auswerteeinrichtung kann in den Decodern 11, 14 integriert oder als separate, mit den Decodern verbundene Einheit 15 ausgebildet sein. Die Auswerteeinrichtung kann auch als extern anschließbare Einheit ausgebildet sein, z.B. in Form eines Personal Computers mit einer geeigneten Auswertesoftware.

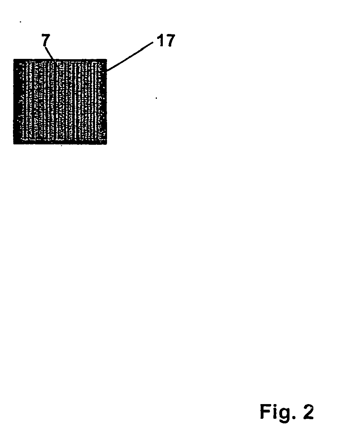

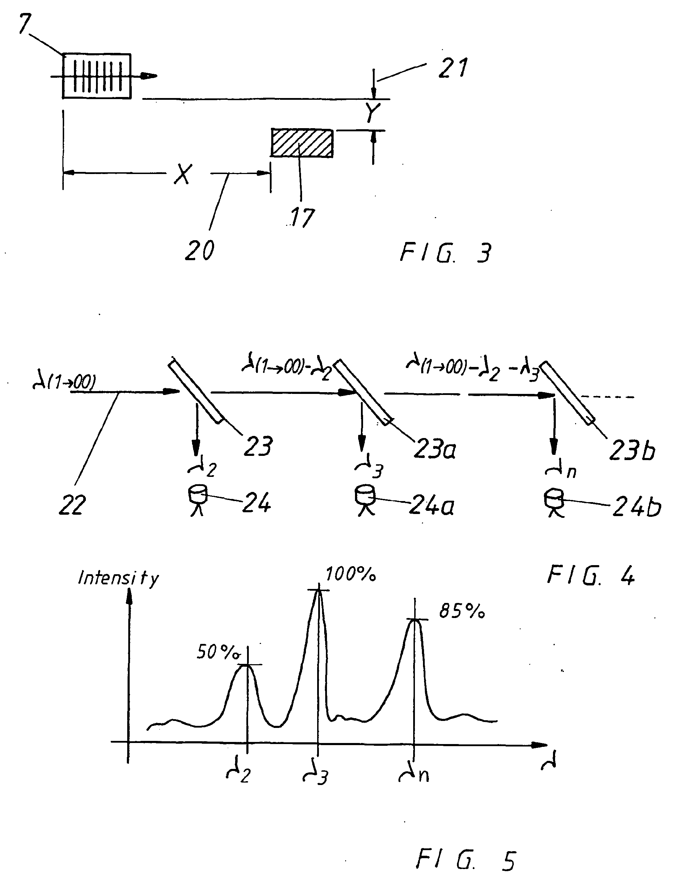

Figur 2 zeigt die Ausgestaltung der offenen Codierung und der codierten Sicherheitsinformationen.

Es ist der Barcode 7 mit der das Sicherheitsmerkmal 17 bildenden lumineszierenden Substanz hinterlegt.

Gemäß Figur 3 kann zusätzliche Sicherheit bei der Identifizierung oder Authentifizierung eines Gegenstands dadurch erreicht werden, dass von der Identifizierung- und Authentifizierungseinheit die gegenseitige Position der auf dem Gegenstand aufgebrachten offen codierten Informationen 7 und der codierten Sicherheitsinformationen 17 erfasst wird. Stimmen die erfassten Informationen und Sicherheitsmerkmale sowie deren gegenseitige Positionen, d.h. z.B. der Abstand 20 in x-Richtung und der Abstand 21 in y-Richtung in einem vorgegebenen Toleranzbereich mit den erwarteten Merkmalen und Positionen überein, kann die Echtheit des Gegenstandes angenommen werden. Stimmen die Merkmale und Positionen nicht überein, ist von einer Fälschung auszugehen.

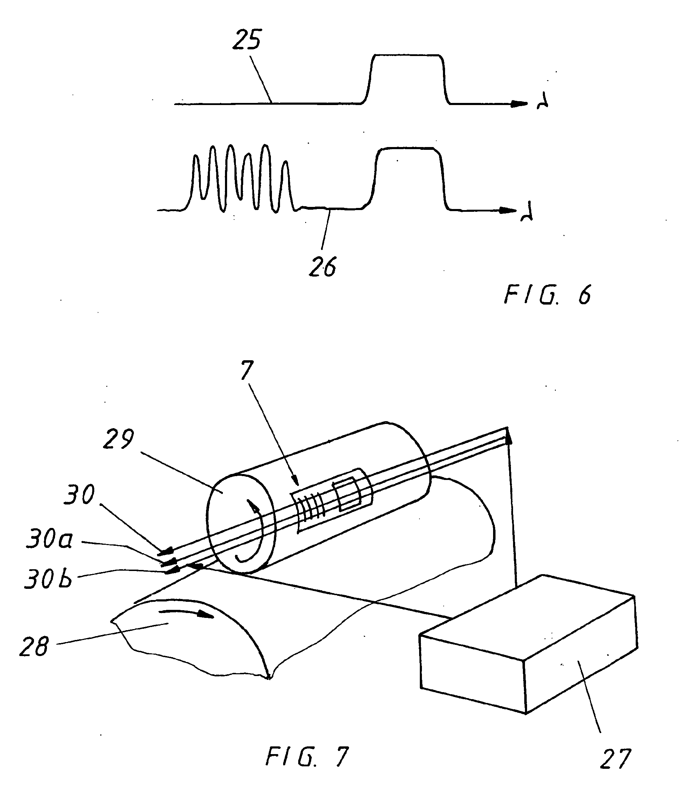

In Figur 4 ist dargestellt, dass ausgehend von einer zu prüfenden, empfangenen Emission 22 des Sicherheitsmerkmals können durch die Verwendung mehrerer selektiver optischer Filter 23, 23a, 23b und mehreren Detektoren 24, 24a, 24b können mehrere Wellenlängen λ₁, λ₂, λ₃ bzw. Fluoreszenzbande detektiert werden. Somit kann ein sogenannter spektraler Fingerprint einer im Sicherheitsmerkmal enthaltenen Substanz erfasst werden, wie er z.B. in Figur 5 gezeigt ist. Es kann auch eine spektrale Zerlegung der von dem Sicherheitsmerkmal abgestrahlten optischen Strahlung, z.B. durch optische Gitter oder Prismen, vorgenommen werden. Dieses Spektrum kann dann z.B. mit einer CCD-Kamera abgebildet und ausgewertet werden.

Zusätzlich kann die relative Intensität jeder erfassten Wellenlänge λ₁, λ₂, λ₃ oder jedes Frequenzbandes erfasst werden. In Figur 5 sind mehrere detektierte Wellenlängen und ihre Intensitäten dargestellt, die auf die Amplitude der stärksten Wellenlänge normalisiert sind. Je nach Verwendung der im Sicherheitsmerkmal enthaltenen Substanz(en) und deren Konzentrationen kann so einen spezifischer Fingerprint des Sicherheitsmerkmals in Bezug auf emittierte Wellenlängen und Intensitäten erzeugt werden, der schwer nachzubilden ist.

Wir versucht das Spektrum der verwendeten Sicherheitssubstanz durch Verwendung breitbandig fluoreszierender, z.B. organischer, Stoffe nachzustellen, fluoreszieren diese Stoffe nicht nur bei der nachzubildenden Wellenlänge sondern häufig auch in unmittelbarer spektraler Nähe zur Wellenlänge des Anregungslichts. Diese Fluoreszenz kann mit dem Detektor, der zur Auslesung des Barcodes im sichtbaren Wellenlängenbereich verwendet wird, zusätzlich erfasst werden und auf diese Weise ein Fälschungsversuch als solcher erkannt werden. Figur 6 zeigt das Spektrum der anregenden Emission 25 und das vom Sicherheitsmerkmal emittierte Spektrum 26, das sowohl bei der anregenden Wellenlängenbereich als auch in einem anderen Wellenlängenbereich eine Fluoreszenzemission zeigt.

Schließlich zeigt Figur 7 eine weitere Anordnung zum Verifizieren eines mit offen codierten Informationen 7 und Sicherheitsmerkmalen 8 versehenen Gegenstands. Es ist eine Scannereinrichtung 27 in Form eines erfindungsgemäß modifizierten Barcodelesers vorgesehen, die Informationen 7 und eine Sicherheitsinformation 8 eines in Rotation versetzten Gegentands 29 verifizieren soll. Hierzu wird der Gegenstand 29 durch eine rotierende Trommel 28 in Drehung versetzt. Der Gegenstand 29 kann auch direkt auf der rotierenden Trommel 28 angeordnet werden. Die Abtastrate des Scanners 27, die Abmessungen der Sicherheitsmerkmale 8 sowie die Rotationsgeschwindigkeit der Trommel 28 sind derart aufeinander abgestimmt, dass beim Scannen des Gegenstands die Sicherheitsinformationen 8 in einer bestimmten Anzahl von Scanvorgängen, im Beispiel drei Scanvorgänge 30, 30a, 30b, nacheinander erkannt werden. Ist die Anzahl der erfolgreichen Scanvorgänge 30, 30a, 30b kleiner oder größer als die eingestellten Parameter vorgegebene Anzahl kann das ein Hinweis darauf sein, dass am Gegenstand, der Sicherheitsinformation oder dem Auslesesystem manipuliert wurde bzw. die Echtheit des Gegenstands nicht gegeben ist.

### Bezugszeichenliste

- 1: Gehäuse
- 2: Laserdiode
- 3: Spiegel (halbdurchlässig oder dichroitisch)
- 4: Drehspiegeleinheit
- 5: Fenster
- 6: Scanstrahl
- 7: Barcode
- 8: -
- 9: Spiegel (halbdurchlässig oder dichroitisch)
- 10: Detektor
- 11: Decodiereinheit
- 12: Optischer Filter
- 13: Detektor
- 14: Decodiereinheit
- 15: Auswerteeinrichtung
- 16: -
- 17: Sicherheitsinformation
- 18: -
- 19: -
- 20: X-Abstand
- 21: Y-Abstand
- 22: Empfangene Emission
- 23: Optischer Filter 23a, 23b
- 24: Detektor 24a, 24b
- 25: Anregende Emission
- 26: Empfangene Emission
- 27: Scanner
- 28: Rotierende Trommel
- 29: Gegenstand
- 30: Scanstrahl 30a. 30b

## Patentansprüche

1. Verfahren zur Identifikation und Authentifikation eines Gegenstandes mit Hilfe von auf dem Gegenstand aufgebrachten codierten Informationen, beinhaltend die Schritte:
Abtasten der die codierten Informationen (7, 17) aufweisenden Oberfläche des Gegenstandes mittels eines von einer Lichtquelle (2) und einer Ablenkeinheit (4) erzeugten Abtaststrahls (6);
Erfassen der codierten Information (7, 17) anhand des von der abgetasteten Oberfläche reflektierten und/oder abgestrahlten Lichts mittels optischen Detektionseinrichtungen (10, 13), mit einem ersten Messkanal zur Erfassung von offen codierten Informationen (7) und mindestens einem zweiten Messkanal zur Erfassung von codierten Sicherheitsinformationen (17);
Decodieren der von den Detektionseinrichtungen (10, 13) erfassten Informationen (7, 17); und
Identifizieren und Authentifizieren des Gegenstandes anhand der decodierten offenen Informationen (7) und der decodierten Sicherheitsinformationen (17), wobei die von den Messkanälen verarbeiteten Wellenlängen oder Wellenlängenbereiche unterschiedlich sind und als offen codierte Informationen (7) sichtbare Barcodes verwendet werden und als codierte Sicherheitsinformationen (17) eine lumineszierende Substanz enthaltende Merkmale verwendet werden und die lumineszierende Substanz durch optische Anregung mit einer bestimmten Wellenlänge λ₁ bei einer oder mehreren anderen Wellenlängen λ₂ spezifische Emissionen zeigt, wobei durch die Verwendung mehrerer selektiver optischer Filter (23, 23a, 23b) oder halbdurchlässige oder dichroitische Spiegel (3, 9) und mehrerer Detektoren (10, 13; 24, 24a, 24b) mehrere Wellenlängen λ₁, λ₂, λ₃ bzw. Fluoreszenzbande detektierbar sind und so ein spektraler Fingerprint einer im Sicherheitsmerkmal enthaltenen Substanz erfasst wird, wobei eine zusätzliche Identifizierung und Authentifizierung des Gegenstands anhand einer zuvor festgelegten räumlichen Beziehung zwischen den offen codierten Informationen (7) und den codierten Sicherheitsinformationen (17) des Gegenstandes erfolgt, **dadurch gekennzeichnet, dass** die sichtbaren Barcodes (7) mit der das Sicherheitsmerkmal (17) bildenden lumineszierenden Substanz als "Negativ-Barcode" hinterlegt sind.

2. Verfahren nach Anspruch 1, **dadurch gekennzeichnet, dass** die Lichtquelle (2) Licht einer bestimmten Wellenlänge oder eines bestimmten Wellenlängenbereichs abstrahlt.

3. Verfahren nach einem der vorhergehenden Ansprüche, **dadurch gekennzeichnet, dass** der erste Messkanal nur Licht mit mindestens einer bestimmten Wellenlänge oder eines bestimmten Wellenlängenbereichs erfasst.

4. Verfahren nach einem der vorhergehenden Ansprüche, **dadurch gekennzeichnet, dass** der zweite Messkanal nur Licht mit mindestens einer bestimmten Wellenlänge oder eines bestimmten Wellenlängenbereichs erfasst.

5. Verfahren nach einem der vorhergehenden Ansprüche, **dadurch gekennzeichnet, dass** eine spektrale Zerlegung der von dem Sicherheitsmerkmal abgestrahlten optischen Strahlung vorgenommen wird, wobei das erhaltene Spektrum von einer digitalen Kamera abgebildet und ausgewertet wird.

6. Verfahren nach einem der vorhergehenden Ansprüche, **dadurch gekennzeichnet, dass** zusätzlich die relative Intensität jeder erfassten Wellenlängen λ₁, λ₂, λ₃ oder jedes Frequenzbandes erfasst wird.

7. Verfahren nach einem der vorhergehenden Ansprüche, **dadurch gekennzeichnet, dass** mit dem Detektor, der zur Auslesung des Barcodes verwendet wird, zusätzlich eine vorhandene Fluoreszenz des Sicherheitsmerkmals im sichtbaren Wellenlängenbereich erfasst wird.

8. Verfahren nach einem der vorhergehenden Ansprüche, **dadurch gekennzeichnet, dass** eine Scannereinrichtung (27) vorgesehen ist, die Informationen (7) und eine Sicherheitsinformation (8) eines in Rotation versetzten Gegentands (29) verifiziert, wobei die Abtastrate des Scanners (27), die Abmessungen der Sicherheitsmerkmale (8) sowie die Rotationsgeschwindigkeit des Gegenstands (27) derart aufeinander abgestimmt sind, dass beim Scannen des Gegenstands die Sicherheitsinformationen (8) in einer bestimmten Anzahl von Scanvorgängen nacheinander erkannt werden.

9. Gegenstand in Form von z.B. Dokumenten oder Wert- und Sicherheiterzeugnissen, wie zum Beispiel Banknoten, Ausweiskarten, Gutscheine, Briefmarken, Schecks, Etiketten, Bücher, Pfandlabels und dergleichen, oder von Luxusartikeln und Konsumgütern, wie zum Beispiel Uhren, Schmuck, Tonträger, Kleidung, Möbel, Kfz-Ersatzteile, Pfandgebinde, Medikamente, Lebensmittel und dergleichen, mit auf der Oberfläche aufgebrachten codierten Informationen zur schnellen und einfachen maschinellen Identifizierung und Authentifizierung, wobei die codierten Informationen (7, 17) offen codierte Informationen (7) und codierte Sicherheitsinformationen (17) aufweist, und als offen codierte Informationen (7) sichtbare Barcodes verwendet werden und als codierte Sicherheitsinformationen (17) eine lumineszierende Substanz enthaltende Merkmale verwendet werden, **dadurch gekennzeichnet, dass** die sichtbaren Barcodes (7) mit der das Sicherheitsmerkmal (17) bildenden lumineszierenden Substanz als "Negativ-Barcode" hinterlegt sind.

10. Gegenstand nach Anspruch 9, **dadurch gekennzeichnet, dass** das Sicherheitsmerkmal (17) als flächiger Unterdruck vorliegt, auf dem nachträglich der Barcode (7) mit selektiv die Lumineszenzstrahlung des Sicherheitsmerkmal (17) schluckender Farbe aufgedruckt ist.

11. Gegenstand nach Anspruch 9, **dadurch gekennzeichnet, dass** das Sicherheitsmerkmal (17) als Direktdruck in Form eines Barcodes mit der fluoreszierenden Farbe vorliegt.

## Claims

1. Method for the identification and authentication of an object with the aid of coded information applied to the object, comprising the steps:
Scanning the surface of the object having the coded information (7, 17), by means of a scanning beam (6) produced by a light source (2) and a deflection unit (4);
Detecting the coded information (7, 17) with the aid of the light reflected and/or emitted from the scanned surface by means of optical detection devices (10, 13), comprising a first measuring channel for detecting openly coded information (7) and at least a second measuring channel for detecting coded security information (17);
Decoding the information (7, 17) detected by the detection devices (10, 13); and
Identification and authentication of the object with the aid of the decoded open information (7) and the decoded security information (17), wherein the wavelengths or wavelength ranges processed by the measuring channels are different and visible barcodes are used as openly coded information (7) and features containing a luminescent substance are used as coded security information (17) and the luminescent substance shows specific emissions by optical excitement with a specific wavelength λ₁ at one or more other wavelengths λ₂, wherein, owing to the use of a plurality of selective optical filters (23, 23a, 23b) or semi-transparent or dichroitic mirrors (3, 9) and a plurality of detectors (10, 13; 24, 24a, 24b), a plurality of wavelengths λ₁, λ₂, λ₃ or fluorescent strips are detectable and a spectral fingerprint of a substance contained in the security feature is thus detected, wherein an additional identification and authentication of the object takes place with the aid of a previously established spatial relationship between the openly coded information (7) and the coded security information (17) of the object, **characterised in that** the visible barcodes (7) with the luminescent substance forming the security feature (17) are stored as a "negative barcode".

2. Method according to claim 1, **characterised in that** the light source (2) emits light of a specific wavelength or a specific wavelength range.

3. Method according to any one of the preceding claims, **characterised in that** the first measuring channel only detects light with at least one specific wavelength or one specific wavelength range.

4. Method according to any one of the preceding claims, **characterised in that** the second measuring channel only detects light with at least one specific wavelength or one specific wavelength range.

5. Method according to any one of the preceding claims, **characterised in that** a spectral decomposition of the optical radiation emitted by the security feature is carried out, the spectrum obtained being reproduced by a digital camera and evaluated.

6. Method according to any one of the preceding claims, **characterised in that** the relative intensity of each of the detected wavelengths λ₁, λ₂, λ₃ or each frequency band is additionally detected.

7. Method according to any one of the preceding claims, **characterised in that** a fluorescence present of the security feature in the visible wavelength range is additionally detected with the detector, which is used for reading the barcode.

8. Method according to any one of the preceding claims, **characterised in that** a scanner device (27) is provided, which verifies information (7) and security information (8) of an object (29) made to rotate, the scanning rate of the scanner (27), the dimensions of the security features (8) and the rotational speed of the object (29) being matched to one another in such a way that, when scanning the object, the items of security information (8) can be recognised one after the other in a specific number of scanning processes.

9. Object in the form of, for example, documents or valuable and security products, such as, for example, bank notes, identity cards, vouchers, stamps, cheques, labels, books, security labels and the like or of luxury articles and consumer goods, such as, for example, clocks, jewellery, sound storage media, clothing, furniture, car replacement parts, security packaging, medicaments, food and the like, with coded information applied to the surface, for rapid and simple machine identification and authentication, wherein the coded information (7, 17) has openly coded information (7) and coded security information (17), and visible barcodes are used as openly coded information (7) and features containing a luminescent substance are used as coded security information (17), **characterised in that** the visible barcodes (7) with the luminescent substance forming the security feature (17) are stored as a "negative barcode".

10. Object according to claim 9, **characterised in that** the security feature (17) is present as a flat under-print, on which the barcode (7) is retrospectively printed with dye selectively absorbing the luminescent radiation of the security feature (17).

11. Object according to claim 9, **characterised in that** the security feature (17) is present as a direct print in the form of a barcode with the fluorescent dye.

## Revendications

1. Procédé pour identifier et authentifier un objet à l'aide d'informations codées qui sont installées sur l'objet, comprenant les étapes suivantes :
- balayage de la surface de l'objet qui est pourvue des informations codées (7, 17) à l'aide d'un faisceau de balayage (6) produit par une source lumineuse (2) et une unité de déviation (4) ;
- relevé des informations codées (7, 17) à l'aide de la lumière réfléchie et/ou diffusée par la surface balayée, grâce à des détecteurs optiques (10, 13), avec un premier canal de mesure pour relever des informations codées découvertes (7) et au moins un second canal de mesure pour relever des informations de sécurité codées (17) ;
- décodage des informations (7, 17) relevées par les détecteurs (10, 13) ;
- identification et authentification de l'objet à l'aide des informations découvertes (7) décodées et des informations de sécurité (17) décodées, étant précisé que les longueurs d'ondes ou plages de longueurs d'ondes traitées par les canaux de mesure sont différentes, qu'on utilise comme informations codées découvertes (7) des codes-barres visibles et comme informations de sécurité codées (17) des caractéristiques contenant une substance luminescente et que la substance luminescente présente grâce à une excitation optique avec une longueur d'onde définie λ₁ des émissions spécifiques dans le cas d'une ou plusieurs autres longueurs d'ondes λ₂, étant précisé que grâce à l'utilisation de plusieurs filtres optiques sélectifs (23, 23a, 23b) ou à des miroirs semi-transparents ou dichroïques (3, 9) et à plusieurs détecteurs (10, 13 ; 24, 24a, 24b), plusieurs longueurs d'ondes λ₁, λ₂, λ₃ ou bandes fluorescentes peuvent être détectées et une empreinte digitale spectrale d'une substance contenue dans la caractéristique de sécurité est ainsi relevée, et étant précisé qu'une identification et une authentification supplémentaires de l'objet ont lieu à l'aide d'une relation dans l'espace, fixée au préalable, entre les informations codées découvertes (7) et les informations de sécurité codées (17) de l'objet,
**caractérisé en ce que** les codes-barres visibles (7) contenant la substance luminescente qui forme la caractéristique de sécurité (17) sont mis en mémoire comme "codes-barres négatifs".

2. Procédé selon la revendication 1, **caractérisé en ce que** la source lumineuse (2) émet une lumière d'une longueur d'onde définie ou d'une plage de longueurs d'onde définie.

3. Procédé selon l'une des revendications précédentes, **caractérisé en ce que** le premier canal de mesure ne relève que la lumière avec au moins une longueur d'onde définie ou que la lumière d'une plage de longueurs d'ondes définie.

4. Procédé selon l'une des revendications précédentes, **caractérisé en ce que** le second canal de mesure ne relève que la lumière avec au moins une longueur d'onde définie ou que la lumière d'une plage de longueurs d'ondes définie.

5. Procédé selon l'une des revendications précédentes, **caractérisé en ce qu'**une décomposition spectrale du rayonnement optique émis par la caractéristique de sécurité est réalisée, le spectre obtenu étant représenté et analysé par une caméra numérique.

6. Procédé selon l'une des revendications précédentes, **caractérisé en ce qu'**on relève en supplément l'intensité relative de chaque longueur d'onde λ₁, λ₂, λ₃ relevée ou de chaque bande de fréquences.

7. Procédé selon l'une des revendications précédentes, **caractérisé en ce que** grâce au détecteur qui sert à lire le code-barres, on relève en supplément une fluorescence existante de la caractéristique de sécurité dans la plage de longueurs d'ondes visible.

8. Procédé selon l'une des revendications précédentes, **caractérisé en ce qu'**il est prévu un scanner (27) qui vérifie les informations (7) et une information de sécurité (8) d'un objet en rotation (29), la vitesse de balayage du scanner (27), les dimensions des caractéristiques de sécurité (8) et la vitesse de rotation de l'objet (27) étant adaptées mutuellement pour que lors du balayage de l'objet au scanner, les informations de sécurité (8) soient relevées successivement lors d'un nombre défini de passages au scanner.

9. Objet par exemple en forme de documents ou de produits de valeur et de produits de sécurité comme par exemple des billets de banque, des cartes d'identité, des bons, des timbres, des chèques, des étiquettes, des livres, des tickets de consigne, etc., ou en forme d'articles de luxe et de produits de consommation comme par exemple des montres, des bijoux, des supports de son, des vêtements, des meubles, des pièces automobiles de rechange, des emballages consignés, des médicaments, des aliments, etc., comportant des informations codées qui sont installées sur sa surface et qui sont destinées à une identification et à une authentification par machine rapide et simple, étant précisé que les informations codées (7, 17) comportent des informations codées découvertes (7) et des informations de sécurité codées (17), et qu'on utilise comme informations codées découvertes (7) des codes-barres visibles et comme informations de sécurité codées (17) des caractéristiques contenant une substance luminescente,
**caractérisé en ce que** les codes-barres visibles (7) contenant la substance luminescente qui forme la caractéristique de sécurité (17) sont enregistrées comme "code-barres négatif".

10. Objet selon la revendication 9, **caractérisé en ce que** la caractéristique de sécurité (17) existe sous la forme d'une impression inférieure plane sur laquelle le code-barres (7) est imprimé ultérieurement avec une couleur qui absorbe sélectivement le rayonnement luminescent de la caractéristique de sécurité (17).

11. Objet selon la revendication 9, **caractérisé en ce que** la caractéristique de sécurité (17) se présente comme une impression directe sous la forme d'un code-barres avec la couleur fluorescente.
